# EUROPEAN PATENT SPECIFICATION

(11) **EP 2 568 734 B1**
(45) Date of publication and mention of the grant of the patent: **11.05.2016**
(21) Application number: 11795130.1
(22) Date of filing: 02.06.2011
(51) Int. Cl.: H04W 24/08, H04W 68/00

(54) **METHOD, DEVICE AND SYSTEM FOR CELL DETECTION**
VERFAHREN, VORRICHTUNG UND SYSTEM FÜR ZELLDETEKTION
PROCÉDÉ, DISPOSITIF ET SYSTÈME DE DÉTECTION DE CELLULE

(30) Priority: 13.06.2010 CN 201010206967
(43) Date of publication of application: 13.03.2013
(73) Proprietor: Huawei Technologies Co., Ltd., Longgang District Shenzhen, Guangdong 518129 (CN)
(72) Inventor: HUANG, Ying, Guangdong 518129 (CN); WANG, Jun, Guangdong 518129 (CN)
(74) Representative: Pfenning, Meinig & Partner mbB
(86) International application number: PCT/CN2011/075162
(87) International publication number: WO 2011/157164

(56) References cited:
- EP-A1- 1 638 253
- EP-A1- 2 139 278
- WO-A1-2009/031959
- WO-A1-2009/031959
- WO-A1-2012/005633
- WO-A2-2006/063309
- CN-A- 101 594 622

## Description

### Field of the Invention

The present invention relates to mobile communication technologies, and more particularly, to sleeping cell detection technology.

### Background of the Invention

In the mobile communication system, for example UMTS (Universal Mobile Telecommunications System, universal mobile telecommunications system), that the cell unable to be accessed, namely sleep cell (Sleep Cell, SLC) is arose from failure or mis-operation, and so on. If the sleep cell is not discovered by the system, the user equipment will fail to access the sleep cell, and thus user experience will be reduced.

One of the present methods for sleeping cell detection is to passively collect the performance index of the cell and then to determine whether the performance index is in normal scope. If the performance index is in the normal scope, the cell is considered as a non-sleep cell, otherwise, the cell is considered as a sleep cell. In the present solution, the performance index comprises key performance indicators (Key Performance Indicators, KPI) which are related to the access conducted by the UE, for instance, the number of radio resource control (Radio Resource Control, RRC) connections in the cell, the number of times of radio bearer (Radio Bearer, RB) establishment. The system sets a KPI threshold of normal state by self-adaption or pre-configuration. When the actual KPI of a cell is smaller than the KPI threshold, the cell is considered in the sleeping state, otherwise, the cell is considered in the non-sleeping state. However, since the KPI threshold in the present solution is statistical, the correct determination can not be given under some special scenarios. For example, the cell is in the normal working state, if the user equipment (User Equipment, UE) covered by the cell doesn't have any service, namely in the Idle state, the KPI related to the access in the cell are all zero. The cell will be wrongly determined as a sleep cell according to the sleeping cell detection solution mentioned herein.

Another method of the present sleeping cell detection is the solution of network active detection. The network will modify the tracking area code (Tracking Area Code, TAC) of the cell to the modified TAC which is not in the tracking area list (TA list) saved by the UE staying in the cell at the time once the network discovers that no service indication exists for a long time in the cell, or the network will shorten the report period of tracking area update (Tracking Area Update, TAU), so as to make the UE reporting TAU more frequently. When the TAC of the cell is modified or TAU is reported, the network will determine whether the cell is a sleep cell according to whether the cell has TAU signaling. However, since one tracking area (Tracking Area, TA) may comprise a plurality of base stations, the modification on TA of one cell needs to synchronize a plurality of network elements, which leads to a lot of overhead. Meanwhile, since the synchronization of the update spends a period of time, the modification on TAC will affect the called paging badly during the update, for example, the paging can not be called.

Document (WO2009/031959A1) discloses a method of monitoring cells in wireless communication systems. In particular, a wireless communication network automatically tests itself for sleeping cells. This is done by designing the base stations to regularly act as a terminal, contact its neighbouring base stations and as a mobile perform a set of typical traffic cases. From the outcome of the traffic cases the probing base station detects neighbouring base stations that cannot carry traffic. The information about sleeping cells is subsequently forwarded from the base station to the operation and maintenance system.

Document (WO2006/063309) discloses a communication system that optimizes system performance by selectively managing which mobile stations (MSs) operating in the communication system are to serve as test MSs. Based on policies provisioned to the test MSs and in response to an occurrence of a trigger event, the test MSs then report system operating parameters in order to detect sleeping cells, coverage holes, or other flaws in system coverage or in order to determine an impact of a change in an access network configuration.

Document (EP1638253A1) discloses a wireless communication system including a monitoring module that is capable of detecting at least one type of fault scenario in the system. In a disclosed example, sleeping cells are detected by determining a deviation between actual cell performance and an expect cell performance. The disclosed examples include automatically determining the expected cell performance and automatically determining any deviation between the actual cell performance and the expected cell performance. Statistical analysis provides an indication whether a determined deviation is indicative of a fault condition.

Document (EP2139278A1) discloses a method of detecting an outage of a radio cell in a wireless telecommunication network. In the network, at least one of base stations determines for at least one of the radio cells associated with the at least one base stations values of one or more RF-signal related parameters associated with at least one user terminal inside the at least one radio cell. From the determined values of the one or more RF-signal related parameters, one or more indications corresponding to the one or more RF-signal related parameters are determined. Said one or more indications are compared with respective references. If an indication differs from the respective reference in excess of a predefined threshold, a respective trigger event is generated. Dependent on one or more of said respective trigger event, it is indicated that one or more neighbouring radio cells neighbouring the at least one radio cell associated with the at least one base station are affected by an outage.

### Summary of the Invention

In one aspect, the present invention provides a method for sleeping cell detection, comprising: transmitting, by a base station, a paging message in a cell to be detected, wherein the paging message is used for detecting a state of the cell and the paging message comprises a detection indicator which is used for indicating a user equipment, UE, in the cell to be detected to initiate an access process to the cell to be detected; determining, by the base station, that the cell to be detected is a non-sleep cell when the base station detects the access process initiated by the UE in the cell to be detected.

In another aspect, the present invention provides a base station, comprising: a first unit, configured to transmit a paging message in a cell to be detected, wherein the paging message is used for detecting a state of the cell and the paging message comprises a detection indicator which is used for indicating a user equipment, UE, in the cell to be detected to initiate an access process to the cell to be detected; a second unit, configured to detect the access process initiated by the UE in the cell to be detected; and a third unit, configured to determine that the cell to be detected is a non-sleep cell when the second unit detects the access process initiated by the UE in the cell to be detected.

In another aspect, the present invention provides a cell detection system, comprising the base station mentioned above.

In the above technical solutions, the paging message transmitted by the base station is used for detecting a state of the cell and the paging message comprises a detection indicator which is used for indicating a user equipment in the cell to be detected to initiate an access process to the cell to be detected, if the base station detects the access process, the cell to be detected can be determined as a non-sleep cell. The above technical solutions can detect whether a cell is a sleep cell more precisely, and overcome the misjudgment caused by the present sleeping cell detection method. Meanwhile, since it is not necessary to modify TAC or to report TAU frequently by UE, the overhead is reduced and the effect to the called paging is avoided.

### Brief Description of the Drawings

Figure 1 is a flowchart of the method for cell detection according to an embodiment of the present invention;
Figure 2 is a flowchart of the method for cell detection according to another embodiment of the present invention;
Figure 3 is a structural diagram of the base station according to an embodiment of the present invention;
Figure 4 is a structural diagram of the cell detection system according to an embodiment of the present invention.

### DETAILED DESCRIPTION OF THE EMBODIMENTS

The detailed description of the embodiments of the present invention will be given below in combination with the accompanying drawings.

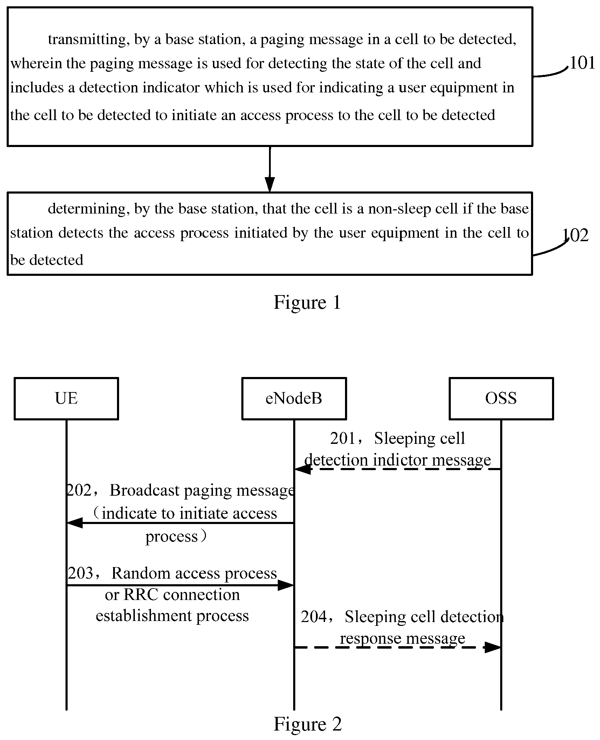

As shown in Figure 1, an embodiment of the present invention provides a method for cell detection, comprising the following steps.
101, a base station transmits a paging message in a cell to be detected, wherein the paging message is used for detecting a state of the cell and the paging message comprises a detection indicator which is used for indicating the UE in the cell to be detected to initiate an access process to the cell to be detected.
102, if the base station detects the access process initiated by the UE in the cell to be detected, the base station determines that the cell to be detected is a non-sleep cell.

Alternatively, if the base station does not detect the access process initiated by the UE in the cell to be detected, the base station determines that the cell is to be detected a sleep cell.

Alternatively, the above-mentioned paging message is a broadcast paging message. The broadcast paging message is transmitted on the sum set of paging timing of all user equipments, that is, the broadcast paging message is transmitted to all of the user equipments in the cell in all the possible paging timings. The above-mentioned access process comprises random access (Random Access) process or radio resource control (Radio Resource Control, RRC) connection establishment process.

In this technical solution, the paging message transmitted by the base station is used for detecting the state of the cell and the paging message comprises a detection indicator which is used for indicating the UE in the cell to be detected to initiate an access process to the cell to be detected, if the base station detects the access process, the cell may be determined as a non-sleep cell. This solution can detect whether a cell is a sleep cell more precisely, and overcome the misjudgment caused by the present sleeping cell detection method. Meanwhile, since it is not necessary to modify TAC or to report TAU frequently by UE, the overhead is reduced and the effect to the called paging is avoided.

As a method for cell detection provided in another embodiment, before the above-mentioned step 101, the method alternatively further comprising: the base station receives a sleeping cell detection indicator message transmitted by the network management equipment. In the present embodiment, the base station may transmit a sleeping cell detection response message which denotes that the cell to be detected is a non-sleep cell to the network management equipment after the base station detects the access process initiated by the UE in the step 102. Alternatively, if the base station does not detect an access process initiated by the UE, the cell to be detected is determined as a sleep cell, the base station does not respond to the sleeping cell detection indicator message transmitted by the network management equipment; or, if the base station does not detect the access process initiated by the UE, the base station may transmit a sleeping cell detection response message to the network management equipment, the sleeping cell detection response message is used to inform the network management equipment that the cell to be detected is a sleep cell.

Alternatively, the above-mentioned paging message is a broadcast paging message. The broadcast paging message is transmitted on the sum set of paging timings of all user equipments, that is, the broadcast paging message is transmitted to all of the user equipments in the cell in all the possible paging timings.

Alternatively, the above-mentioned access process comprises random access process or RRC connection establishment process.

The above technical solution can detect whether a cell is a sleep cell more precisely, and overcome the misjudgment caused by the present sleeping cell detection method. Meanwhile, since it is not necessary to modify TAC or to report TAU frequently by UE, the overhead is reduced and the effect to the called paging is avoided.

The method for cell detection according to the present invention will be described below by taking Long Term Evolution (Long Term Evolution, LTE) system as an example. Accordingly, the base station in the present embodiment takes evolved NodeB (eNodeB) as an example, and the network management equipment takes Operations Support Systems (Operations Support Systems, OSS) as an example. In the present embodiment, LTE system is taken as an example for introducing the method for cell detection. It could be understood that the method for cell detection according to the present invention is not limited to be applied in LTE system, but also can be used in, for example, GSM (Global System For Mobile Communication, global system for mobile communication system), WCDMA (Wideband Code Division Multiple Access, wideband code division multiple access) system, or CDMA (Code Division Multiple Access, code division multiple access) system, or other evolved communication systems following LTE system. Although the term of "base station" is used in the present application, it could be understood by those skilled in the art that the mentioned "base station" may respectively correspond to base station controller (base station controller, BSC) / base station transceiver (base station transceiver, BSC), RNC (radio network controller, radio network controller), BSC/BST, eNodeB in GSM system, WCDMA system, CDMA system, LTE system.

As shown in Figure 2, the present embodiment provides a method for cell detection, comprising the following steps.
201, eNodeB receives a sleeping cell detection indicator message, for example SLC indication, transmitted by OSS, then executes step 202.
202, the eNodeB transmits a paging message in a cell to be detected, wherein the paging message is used for detecting a state of the cell and the paging message comprises a detection indicator which is used for indicating the UE in the cell to be detected to initiate an access process to the cell to be detected.

Alternatively, the above-mentioned paging message is a broadcast paging message. The broadcast paging message is transmitted on the sum set of paging timings of all user equipments, that is, the broadcast paging message is transmitted to all of the user equipments in the cell in all the possible paging timings. For example, the broadcast paging message is transmitted to all of the user equipments in the cell on the 0, 4^{th}, 5^{th}, 9^{th} sub-frames under FDD mode, or the broadcast paging message is transmitted to all of the user equipments in the cell on the 0, 1^{st}, 5^{th}, 6^{th} sub-frames under TDD mode.

In the concrete realization process, the detection indicator in the above-mentioned broadcast paging message may be a special information element IE of the broadcast paging message, which is used to indicate the UE to initiate an access process to a cell covered by the eNodeB, for example, the IE sets 1 bit as a special value, when the value of the set bit is 1, which represents that the broadcast paging message indicates the UE in the cell to be detected to initiate an access process to the cell to be detected. Or, a special IE, such as Sleeping_cell_detection_indicator, may be set in the broadcast paging message. When the UE reads the special IE set in the broadcast paging message, the UE will initiate an access process to the cell to be detected.

203, when the eNodeB detects that the UE in the cell to be detected has initiated a random access process or a RRC connection establishment process, the eNodeB determines the cell to be detected is a non-sleep cell.

As an example, the UE in the cell to be detected can revive and monitor the broadcast paging message according to the discontinuous receiving period of the UE. The UE initiates the random access process or the RRC connection establishment process to the cell to be detected after receiving the broadcast paging message, for example, the UE transmits the random access request or the RRC connection establishment request. When the eNodeB detects the random access request or the RRC connection establishment request, the eNodeB can determine that the cell to be detected is a non-sleep cell.

204, the above-mentioned eNodeB transmits a sleeping cell detection response message, such as SLC indication result, to the above-mentioned OSS. The sleeping cell detection response message indicates that the cell to be detected is a non-sleep cell.

It should be explained that, the above-mentioned step 201 and step 204 are optional. That is, when eNodeB transmits the paging message according to the algorithm of its own but not according to the received sleeping cell detection indicator message transmitted by OSS, (i.e., executing step 202 directly while not executing step 201), step 204 can not be executed accordingly. In the concrete realization process, the cell to be detected may be determined by eNodeB itself, or be determined by the network management equipment to be informed to the eNodeB afterwards: For example, in the solution which includes step 201, the cell to be detected may be determined by OSS then to be informed to eNodeB, or the cell to be detected may be determined by eNodeB after the eNodeB receives the sleeping cell detection indicator message transmitted by OSS; in the solution which excludes step 201, the cell to be detected may be determined by eNodeB itself, or be determined by the network management equipment to be informed to the eNodeB afterwards.

Alternatively, if the cell to be detected is determined as a sleep cell when the eNodeB does not detect an access process initiated by the UE in step 203, eNodeB does not transmit the sleeping cell detection response message to the OSS, otherwise eNodeB may also transmit the sleeping cell detection response message to the network management equipment, the sleeping cell detection response message is used to inform the network management equipment that the cell to be detected is a non-sleep cell. When step 201 and step 204 are executed, alternatively, OSS may further start the timer at the time of transmitting the sleeping cell detection indicator message. If the OSS still does not receive the sleeping cell detection response message even when the timer set by the OSS is in overtime, OSS can determine that the cell to be detected is a sleep cell.

In the above-mentioned technical solution, the paging message transmitted by the base station is used for detecting the state of the cell and the paging message comprises a detection indicator which is used for indicating the UE in the cell to be detected to initiate an access process to the cell to be detected, if the base station detects the access process, the cell may be determined as a non-sleep cell. The above technical solution can detect whether a cell is a sleep cell more precisely, and overcome the misjudgment caused by the present sleeping cell detection method. Meanwhile, since it is not necessary to modify TAC or to report TAU frequently by UE, the overhead is reduced and the effect to the called paging is avoided.

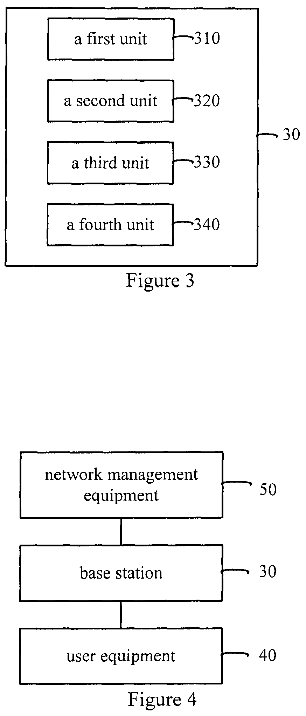

The present embodiment provides a base station 30 which is configured to realize the above-mentioned embodiment of the method for cell detection. As shown in Figure 3, the base station comprises a first unit 310, a second unit 320 and a third unit 330.

Herein, the first unit 310 transmits a paging message in a cell to be detected, wherein the paging message is used for detecting a state of the cell and the paging message comprises a detection indicator which is used for indicating the UE in the cell to be detected to initiate an access process to the cell to be detected; the second unit 320 detects the access process initiated by the UE in the cell to be detected; when the second unit 320 has detected the access process initiated by the above-mentioned UE, for example, detects the random access request or RRC connection establishment request transmitted by the UE, the third unit 330 determines that the cell to be detected is a non-sleep cell.

Alternatively, the base station 30 further comprises: a fourth unit 340, which is configured to receive a sleeping cell detection indicator message transmitted by the network management equipment before the first unit 310 transmits a paging message in the cell to be detected. The third unit 330 is further configured to transmit a sleeping cell detection response message which denotes that the cell to be detected is a non-sleep cell to the network management equipment when the second unit 320 detects the access process initiated by the UE in the cell to be detected. Alternatively, if the second unit 320 does not detect the access process initiated by the UE in the cell to be detected, the third unit 330 is further configured to determine that the cell to be detected is a sleep cell, and not to transmit the sleeping cell detection response message to the network management equipment, or else the third unit 330 is further configured to determine that the cell to be detected is a sleep cell, and to transmit the sleeping cell detection response message to the network management equipment, wherein the sleeping cell detection response message is used to inform the network management equipment that the cell to be detected is a sleep cell.

Alternatively, the above-mentioned paging message is a broadcast paging message. The broadcast paging message is transmitted on the sum set of paging timings of all user equipments, that is, the broadcast paging message is transmitted to all of the user equipments in the cell in all the possible paging timings. The above-mentioned access process comprises random access (Random Access) process or RRC connection establishment process.

The embodiment of the base station provided above can lead the network to detect whether a cell is a sleep cell more precisely, and overcome the misjudgment caused by the present sleeping cell detection method. Meanwhile, since it is not necessary to modify TAC or to report TAU frequently by UE, the overhead is reduced and the effect to the called paging is avoided.

The following embodiment provides a cell detection system, which comprises the base station 30 in the previous embodiment, the cell detection system may be configured to realize the above-mentioned embodiment of the method of cell detection. As shown in Figure 4, the system further comprises the UE 40, the UE 40 is in the cell to be detected, and configured to initiate an access process to the cell to be detected after receiving a paging message transmitted by the base station 30. Alternatively, the system further comprises the network management equipment 50, which is configured to transmit a sleeping cell detection indicator message to the base station 30, and to determine that the cell to be detected is a non-sleep cell when receiving the sleeping cell detection response message transmitted by the base station 30. Alternatively, when the network management equipment 50 does not receive the sleeping cell detection response message transmitted by the base station 30, the network management equipment 50 determines that the cell to be detected is a sleep cell.

Alternatively, the network management equipment 50 is further configured to start a timer at the time of transmitting the sleeping cell detection indicator message. Before the time of the timer is out, if the network management equipment 50 does not receive the response made by the base station to the sleeping cell detection indicator message, the network management equipment 50 determines that the cell to be detected is a sleep cell.

Alternatively, the above-mentioned paging message is a broadcast paging message The broadcast paging message is transmitted on the sum set of paging timings of all user equipments, that is, the broadcast paging message is transmitted to all of the user equipments in the cell in all the possible paging timings. The above-mentioned access process comprises random access (Random Access) process or RRC connection establishment process.

In the concrete realization process, the above-mentioned network management equipment 50 comprising Operations Support Systems OSS.

In this technical solution, the paging message transmitted by the base station is used for detecting the state of the cell and the paging message comprises a detection indicator which is used for indicating the UE in the cell to be detected to initiate an access process to the cell to be detected, if the base station has detected the access process, the cell may be determined as a non-sleep cell. The above technical solution can detect whether a cell is a sleep cell more precisely, and overcome the misjudgment caused by the present sleeping cell detection method. Meanwhile, since it is not necessary to modify TAC or to report TAU frequently by UE, the overhead is reduced and the effect to the called paging is avoided.

It should be understood by those skilled in the art that, a part of or the whole process of the embodiments of realizing the above-mentioned methods can be accomplished by the related hardware instructed by the computer program. The program can be stored in a computer readable storage medium, and when the program is executed, the program may comprise the process of the embodiment of each above-mentioned method. Herein, the storage medium can be diskette, CD, Read-Only Memory (Read-Only Memory, ROM) or Random Access Memory (Random Access Memory, RAM) and so on.

The above-mentioned embodiments further detailed illustrated the objective, technical solution and beneficial effects of the present invention. It should be noted that the above embodiments are just some embodiments of the present invention and gives no limit to the scope of the present invention. Any amendments, equivalent substitutions and improvements made by those skilled in the art, based on non-creative work, shall be included in the protective scope of the present invention.

## Claims

1. A method for cell detection, comprising:
transmitting (101), by a base station, a paging message in a cell to be detected, wherein the paging message is used for detecting a state of the cell and the paging message comprises a detection indicator which is used for indicating a user equipment, UE, in the cell to be detected to initiate an access process to the cell to be detected;
determining (102), by the base station, that the cell to be detected is a non-sleep cell when the base station detects the access process initiated by the UE in the cell to be detected.

2. The method according to claim 1, before transmitting (101), by the base station, a paging message in a cell to be detected, further comprising:
receiving, by the base station, a sleeping cell detection indicator message transmitted by a network management equipment.

3. The method according to claim 2, wherein after the base station detects the access process initiated by the UE, the base station transmits a sleeping cell detection response message to the network management equipment, the sleeping cell detection response message denotes that the cell to be detected is a non-sleep cell.

4. The method according to any one of claims 1-3, wherein the paging message is a broadcast paging message which is transmitted on a sum set of paging timings of all UEs.

5. The method according to any one of claims 1-3, wherein the access process comprises random access process or radio resource control, RRC, connection establishment process.

6. A base station (30), comprising:
a first unit (310), configured to transmit a paging message in a cell to be detected, wherein the paging message is used for detecting a state of the cell and the paging message comprises a detection indicator which is used for indicating a user equipment, UE, in the cell to be detected to initiate an access process to the cell to be detected;
a second unit (320), configured to detect the access process initiated by the UE in the cell to be detected; and
a third unit (330), configured to determine that the cell to be detected is a non-sleep cell when the second unit detects the access process initiated by the UE in the cell to be detected.

7. The base station (30) according to claim 6, wherein the base station (30) further comprises:
a fourth unit (340), configured to receive a sleeping cell detection indicator message transmitted by a network management equipment before the base station (30) transmits a paging message in a cell to be detected.

8. The base station (30) according to claim 7, wherein the third unit (330) is further configured to transmit a sleeping cell detection response message to the network management equipment when the second unit (320) detects the access process initiated by the UE, the sleeping cell detection response message denotes that the cell to be detected is a non-sleep cell.

9. The base station (30) according to any one of claims 6-8, wherein the paging message is a broadcast paging message which is transmitted on a sum set of paging timings of all UEs.

10. The base station (30) according to any one of claims 6-8, wherein the access process comprises random access process or radio resource control, RRC, connection establishment process.

11. A cell detection system, comprising the base station (30) according to any one of claims 6-10.

12. The system according to claim 11, wherein the system further comprises:
a user equipment, UE, (40) in the cell to be detected, configured to initiate an access process to the cell to be detected after receiving the paging message.

13. The system according to claim 11, wherein the system further comprises:
a network management equipment (50), configured to transmit the sleeping cell detection indicator message to the base station (30).

14. The system according to claim 13, wherein the network management equipment (50) is further configured to receive the sleeping cell detection response message transmitted by the base station (30) and to determine that the cell to be detected is a non-sleep cell according to the sleeping cell detection response message.

## Patentansprüche

1. Verfahren zur Zellendetektion, das Folgendes umfasst:
Senden (101), von einer Basisstation, einer Suchnachricht in einer zu detektierenden Zelle, wobei die Suchnachricht zum Detektieren eines Zustands der Zelle verwendet wird und die Suchnachricht einen Detektionsanzeiger umfasst, der zum Anzeigen eines Anwendergeräts, UE, in der zu detektierenden Zelle verwendet wird, um einen Zugangsprozess zu der zu detektierenden Zelle einzuleiten;
Bestimmen (102), von einer Basisstation, dass die zu detektierende Zelle eine Nichtschlafzelle ist, wenn die Basisstation den von dem UE in der zu detektierenden Zelle eingeleiteten Zugangsprozess detektiert.

2. Verfahren nach Anspruch 1, das vor dem Senden (101), von der Basisstation, einer Suchnachricht in einer zu detektierenden Zelle ferner Folgendes umfasst:
Empfangen, von der Basisstation, einer Schlafzellendetektions-Anzeigenachricht, die von einer Netzmanagementausrüstung gesendet wird.

3. Verfahren nach Anspruch 2, wobei die Basisstation, nachdem die Basisstation den von dem UE eingeleiteten Zugangsprozess detektiert, eine Schlafzellendetektions-Antwortnachricht an die Netzmanagementausrüstung sendet, wobei die Schlafzellendetektions-Antwortnachricht anzeigt, dass die zu detektierende Zelle eine Nichtschlafzelle ist.

4. Verfahren nach einem der Ansprüche 1-3, wobei die Suchnachricht eine Rundsendesuchnachricht ist, die auf einem Summensatz von Suchzeiten aller UEs gesendet wird.

5. Verfahren nach einem der Ansprüche 1-3, wobei der Zugangsprozess einen zufälligen Zugangsprozess oder einen Funkressourcensteuerungs(RRC)-Verbindungsherstellungsprozess umfasst.

6. Basisstation (30), die Folgendes umfasst:
eine erste Einheit (310), die ausgelegt ist zum Senden einer Suchnachricht in einer zu detektierenden Zelle, wobei die Suchnachricht zum Detektieren eines Zustands der Zelle verwendet wird und die Suchnachricht einen Detektionsanzeiger umfasst, der zum Anzeigen eines Anwendergeräts, UE, in der zu detektierenden Zelle verwendet wird,
um einen Zugangsprozess zu der zu detektierenden Zelle einzuleiten;
eine zweite Einheit (320), die ausgelegt ist zum Detektieren des von dem UE in der zu detektierenden Zelle eingeleiteten Zugangsprozesses; und
eine dritte Einheit (330), die ausgelegt ist zum Bestimmen, dass die zu detektierende Zelle eine Nichtschlafzelle ist, wenn die Basisstation den von dem UE in der zu detektierenden Zelle eingeleiteten Zugangsprozess detektiert.

7. Basisstation (30) nach Anspruch 6, wobei die Basisstation (30) ferner Folgendes umfasst:
eine vierte Einheit (340), die ausgelegt ist zum Empfangen einer Schlafzellendetektions-Anzeigenachricht, die von einer Netzmanagementausrüstung gesendet wird, bevor die Basisstation (30) eine Suchnachricht in einer zu detektierenden Zelle sendet.

8. Basisstation (30) nach Anspruch 7, wobei die dritte Einheit (330) ferner ausgelegt ist zum Senden einer Schlafzellendetektions-Antwortnachricht an die Netzmanagementausrüstung, wenn die zweite Einheit (320) den von dem UE eingeleiteten Zugangsprozess detektiert, wobei die Schlafzellendetektions-Anzeigenachricht anzeigt, dass die zu detektierende Zelle eine Nichtschlafzelle ist.

9. Basisstation (30) nach einem der Ansprüche 6-8, wobei die Suchnachricht eine Rundsendesuchnachricht ist, die auf einem Summensatz von Suchzeiten aller UEs gesendet wird.

10. Basisstation (30) nach einem der Ansprüche 6-8, wobei der Zugangsprozess einen zufälligen Zugangsprozess oder einen Funkressourcensteuerungs(RRC)-Verbindungsherstellungsprozess umfasst.

11. Zellendetektionssystem, das die Basisstation (30) nach einem der Ansprüche 6-10 umfasst.

12. System nach Anspruch 11, wobei das System ferner Folgendes umfasst:
ein Anwendergerät, UE, (40) in der zu detektierenden Zelle, das ausgelegt ist zum Einleiten eines Zugangsprozesses zu der zu detektierenden Zelle, nachdem die Suchnachricht empfangen wurde.

13. System nach Anspruch 11, wobei das System ferner Folgendes umfasst:
eine Netzmanagementausrüstung (50), die ausgelegt ist zum Senden der Schlafzellendetektions-Anzeigenachricht an die Basisstation (30).

14. System nach Anspruch 13, wobei die Netzmanagementausrüstung (50) ferner ausgelegt ist zum Empfangen der von der Basisstation (30) gesendeten Schlafzellendetektions-Antwortnachricht und zum Bestimmen, gemäß der Schlafzellendetektions-Antwortnachricht, dass die zu detektierende Zelle eine Nichtschlafzelle ist.

## Revendications

1. Procédé de détection de cellule, comprenant les étapes suivantes :
transmettre (101), par une station de base, un message de recherche de personne dans une cellule à détecter, où le message de recherche de personne est utilisé pour détecter un état de la cellule et le message de recherche de personne comprend un indicateur de détection qui est utilisé pour indiquer un équipement utilisateur, UE, dans la cellule à détecter pour initier un processus d'accès à la cellule à détecter ;
déterminer (102), par la station de base, que la cellule à détecter est une cellule hors veille lorsque la station de base détecte le processus d'accès initié par l'UE dans la cellule à détecter.

2. Procédé selon la revendication 1, comprenant en outre, avant de transmettre (101), par la station de base, un message de recherche de personne dans une cellule à détecter, l'étape suivante :
recevoir, par la station de base, un message indicateur de détection de cellule en veille transmis par un équipement de gestion de réseau.

3. Procédé selon la revendication 2, dans lequel, après que la station de base a détecté le processus d'accès initié par l'UE, la station de base transmet un message de réponse de détection de cellule en veille à l'équipement de gestion de réseau, le message de réponse de détection de cellule en veille indiquant que la cellule à détecter est une cellule hors veille.

4. Procédé selon l'une quelconque des revendications 1 à 3, dans lequel le message de recherche de personne est un message de recherche de personne de diffusion qui est transmis à un ensemble total de temps de recherche de personne de tous les UE.

5. Procédé selon l'une quelconque des revendications 1 à 3, dans lequel le processus d'accès comprend un processus d'accès aléatoire ou un processus d'établissement de connexion de contrôle de ressources radio, RRC.

6. Station de base (30), comprenant :
une première unité (310), configurée pour transmettre un message de recherche de personne dans une cellule à détecter, où le message de recherche de personne est utilisé pour détecter un état de la cellule et le message de recherche de personne comprend un indicateur de détection qui est utilisé pour indiquer un équipement utilisateur, UE, dans la cellule à détecter pour initier un processus d'accès à la cellule à détecter ;
une deuxième unité (320), configurée pour détecter le processus d'accès initié par l'UE dans la cellule à détecter ; et
une troisième unité (330), configurée pour déterminer que la cellule à détecter est une cellule hors veille lorsque la deuxième unité détecte le processus d'accès initié par l'UE dans la cellule à détecter.

7. Station de base (30) selon la revendication 6, où la station de base (30) comprend en outre :
une quatrième unité (340), configurée pour recevoir un message indicateur de détection de cellule en veille transmis par un équipement de gestion de réseau avant que la station de base (30) ne transmette un message de recherche de personne dans une cellule à détecter.

8. Station de base (30) selon la revendication 7, dans laquelle la troisième unité (330) est en outre configurée pour transmettre un message de réponse de détection de cellule en veille à l'équipement de gestion de réseau lorsque la deuxième unité (320) détecte le processus d'accès initié par l'UE, le message de réponse de détection de cellule en veille indiquant que la cellule à détecter est une cellule hors veille.

9. Station de base (30) selon l'une quelconque des revendications 6 à 8, dans laquelle le message de recherche de personne est un message de recherche de personne de diffusion qui est transmis à un ensemble total de temps de recherche de personne de tous les UE.

10. Station de base (30) selon l'une quelconque des revendications 6 à 8, dans laquelle le processus d'accès comprend un processus d'accès aléatoire ou un processus d'établissement de connexion de contrôle de ressources radio, RRC.

11. Système de détection de cellule, comprenant la station de base (30) selon l'une quelconque des revendications 6 à 10.

12. Système selon la revendication 11, dans lequel le système comprend en outre :
un équipement utilisateur, UE, (40) dans la cellule à détecter, configuré pour initier un processus d'accès à la cellule à détecter après réception du message de recherche de personne.

13. Système selon la revendication 11, dans lequel le système comprend en outre :
un équipement de gestion de réseau (50), configuré pour transmettre le message indicateur de détection de cellule en veille à la station de base (30).

14. Système selon la revendication 13, dans lequel l'équipement de gestion de réseau (50) est en outre configuré pour recevoir le message de réponse de détection de cellule en veille transmis par la station de base (30) et pour déterminer que la cellule à détecter est une cellule hors veille en fonction du message de réponse de détection de cellule en veille.
